# EUROPEAN PATENT APPLICATION

(11) **EP 3 431 322 A1**
(43) Date of publication of application: **23.01.2019**
(21) Application number: 18750305.7
(22) Date of filing: 16.05.2018
(51) Int. Cl.: B60L 8/00

(54) **LATERALLY EXPANDABLE PHOTOVOLTAIC DEVICE AND SOLAR POWERED AUTOMOBILE**

(30) Priority: 24.05.2017 CN 201720585146 U
(71) Applicant: Dong Han New Energy Vehicle Technology Co., Ltd, Shanghai 201801 (CN)
(72) Inventor: YU, Xiang, Shanghai 201801 (CN)
(74) Representative: Branca, Emanuela
(86) International application number: PCT/CN2018/087110
(87) International publication number: WO 2018/214786

(57) **Abstract**

A laterally deployable photovoltaic device and a solar vehicle are provided. The photovoltaic device includes at least one movable plate on which a solar cell module is arranged, a rotation drive apparatus which fixedly connects the movable plate to a vehicle body and a flipping apparatus. The rotation drive apparatus includes a fixed end and a drive end, and is secured to the vehicle body via the fixed end, the drive end of the rotation drive apparatus is fixedly connected to the movable plate, and the movable plate is driven by the rotation drive apparatus to rotate to a side of the vehicle body. A fixed end of the flipping apparatus is fixedly connected to the vehicle body, and a flipping adjusting end of the flipping apparatus is fixedly connected to the movable plate, for adjusting an angle of the movable plate relative to the vehicle body. In the laterally deployable photovoltaic device and the solar vehicle, the rotation drive apparatus drives the movable plate to deploy the movable plate on side of the vehicle body to increase an effective area for collecting solar energy and drives the movable plate to retract the movable plate when the solar vehicle is moving so as not to affect movement of the vehicle.

## Description

The present application claims the priority to Chinese Patent Application No. 201720585146.6, titled "LATERALLY DEPLOYABLE PHOTOVOLTAIC DEVICE AND SOLAR VEHICLE", filed on May 24, 2017 with the State Intellectual Property Office of People's Republic of China, which is incorporated herein by reference in its entirety.

### FIELD

The present disclosure relates to the technical field of new energy vehicles, and in particular to a laterally deployable photovoltaic device and a solar vehicle.

### BACKGROUND

Solar vehicles are new energy vehicles which integrate solar cell modules which convert solar energy into electrical energy to drive the vehicles.

For the traditional solar vehicle, an area on which a solar cell module can be arranged is limited due to the restriction on the vehicle structure, resulting in a relatively small amount of solar energy which can be collected by the solar vehicle. Therefore, electrical power converted from solar energy is limited and is far from the actual power requirement of the solar vehicle.

### SUMMARY

It is an object of the present disclosure to provide a laterally deployable photovoltaic device and a solar vehicle, to solve the problem in the conventional technology and improve solar energy collection capability of a solar vehicle.

A laterally deployable photovoltaic device is provided according to the present disclosure. The photovoltaic device includes at least one movable plate on which a solar cell module is arranged, a rotation drive apparatus which fixedly connects the movable plate to a vehicle body and a flipping apparatus.

The rotation drive apparatus includes a fixed end and a drive end, and is secured to the vehicle body via the fixed end, the drive end of the rotation drive apparatus is fixedly connected to the movable plate, and the movable plate is driven by the rotation drive apparatus to rotate to a side of the vehicle body.

A fixed end of the flipping apparatus is fixedly connected to the vehicle body, and a flipping adjusting end of the flipping apparatus is fixedly connected to the movable plate, for adjusting an angle of the movable plate relative to the vehicle body.

In the above laterally deployable photovoltaic device, optionally, the rotation drive apparatus drives the movable plate to rotate to retract the movable plate from the side of the vehicle body.

The above laterally deployable photovoltaic device, optionally, further includes a fixed plate on which a solar cell module is arranged. The rotation drive apparatus drives the movable plate to rotate to retract the movable plate from the side of the vehicle body to a position under the fixed plate.

In the above laterally deployable photovoltaic device, optionally, the number of the movable plate is one or more than one.

In the above laterally deployable photovoltaic device, optionally, the more than one movable plate is arranged to overlap with each other after the rotation drive apparatus drives the movable plate to rotate to retract the movable plate from the side of the vehicle body.

In the above laterally deployable photovoltaic device, optionally, the rotation drive apparatus is a motor.

The above laterally deployable photovoltaic device, optionally, further includes a height adjusting apparatus. A fixed end of the height adjusting apparatus is fixedly connected to the vehicle body, and a height adjusting end of the height adjusting apparatus is fixedly connected to the movable plate, for adjusting a height of the movable plate relative to the vehicle body.

A solar vehicle is further provided according to the present disclosure. The solar vehicle includes the laterally deployable photovoltaic device according to the present disclosure. The photovoltaic device is arranged on a roof of the solar vehicle.

In the above solar vehicle, optionally, the roof of the solar vehicle is provided with a solar cell module.

In the laterally deployable photovoltaic device and the solar vehicle provided according to the present disclosure, the rotation drive apparatus and the movable plate are provided. The rotation drive apparatus drives the movable plate to deploy the movable plate on a side of the vehicle body when the solar vehicle stops travelling, to increase an effective area for collecting solar energy, and drives the movable plate to retract the movable plate when the solar vehicle travels so as not to affect travel of the vehicle. Compared with the conventional technology, the solar energy collection capability of the laterally deployable photovoltaic device and the solar vehicle provided according to the present disclosure is greatly improved.

### BRIEF DESCRIPTION OF THE DRAWINGS

Figure 1 is a schematic diagram of a solar vehicle on which a movable plate is deployed according to an embodiment of the present disclosure;
Figure 2 is a schematic diagram of a solar vehicle on which a movable plate is retracted according to an embodiment of the present disclosure;
Figure 3 is a schematic diagram of a laterally deployable photovoltaic device in which a movable plate is deployed according to an embodiment of the present disclosure; and
Figure 4 is a schematic diagram of a laterally deployable photovoltaic device in which a movable plate is retracted according to an embodiment of the present disclosure.

Reference signs in the drawings are listed as follows:

| | |
|---|---|
| 1-fixed plate | 2-movable plate |
| 3-vehicle body | 4-rotation drive apparatus |

### DETAILED DESCRIPTION

The embodiments of the present disclosure are described in detail hereinafter, and are illustrated in drawings, in which the same or similar reference signs represent the same or similar elements or elements with the same or similar functions throughout the description. The embodiments described in the following with reference to the drawings are only exemplary embodiments which are used to explain the present disclosure, and should not be construed to limit the present disclosure.

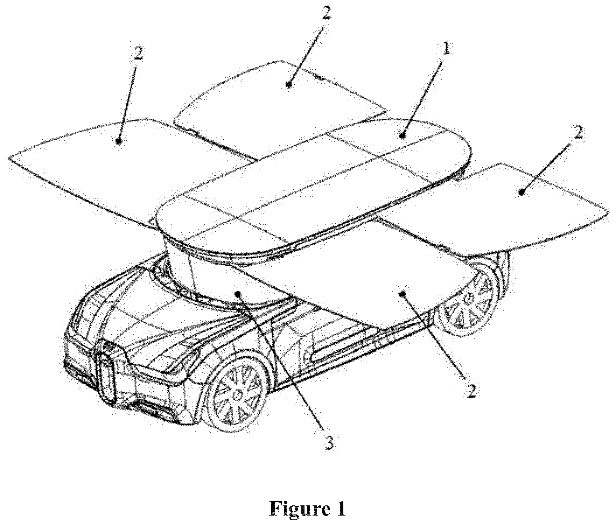

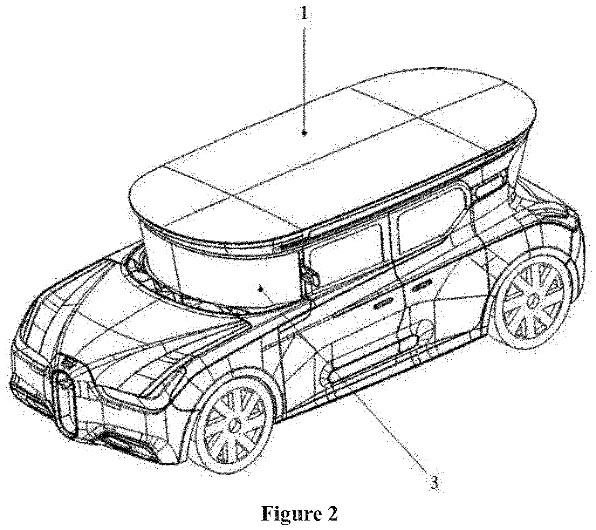

A laterally deployable photovoltaic device is provided according to the embodiment of the present disclosure, which may be applied to a roof of a solar vehicle. Figure 1 is a schematic diagram of a solar vehicle on which a movable plate is deployed according to an embodiment of the present disclosure. Figure 2 is a schematic diagram of a solar vehicle on which a movable plate is retracted according to an embodiment of the present disclosure. As shown in Figure 1 and Figure 2, the laterally deployable photovoltaic device according to the embodiment of the present disclosure includes at least one movable plate 2 on which a solar cell module is arranged and a rotation drive apparatus which fixedly connects the movable plate 2 to a vehicle body 3.

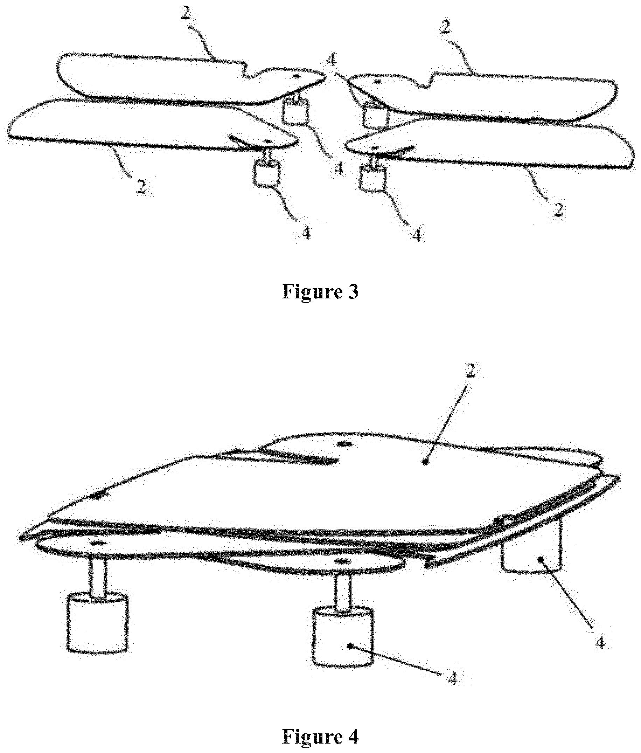

Figure 3 is a schematic diagram of a laterally deployable photovoltaic device in which a movable plate is deployed according to an embodiment of the present disclosure. Figure 4 is a schematic diagram of a laterally deployable photovoltaic device in which a movable plate is retracted according to an embodiment of the present disclosure. Reference is made to Figures 1 to 4, a rotation drive apparatus 4 includes a fixed end and a drive end. The rotation drive apparatus 4 is secured to the vehicle body 3 via the fixed end. The drive end of the rotation drive apparatus 4 is fixedly connected to the movable plate 2. The movable plate 2 is driven by the rotation drive apparatus 4 to rotate to a side of the vehicle body 3.

The rotation drive apparatus 4 may be implemented in many ways, such as a motor, a cylinder, an oil cylinder and other power devices. Optionally, the rotation drive apparatus 4 in the embodiment may be a motor. A fixed end of the motor may be fixedly connected to the vehicle body 3 via a screw and a bolt or may be soldered to the vehicle body 3. The drive end may be a rotating shaft of the motor. The motor drives the rotating shaft to rotate, thereby driving the movable plate 2 to laterally deploy and laterally retract the movable plate 2. The motor may be powered by energy converted from solar energy, thereby further effectively using solar energy.

The laterally deployable photovoltaic device according to the embodiment of the present disclosure may be applied to the vehicle or may other devices which utilize solar energy. When applied to the vehicle, the movable plate may be deployed to increase an effective area for collecting solar energy.

Optionally, the rotation drive apparatus 4 is further configured to drive the movable plate 2 to rotate to retract the movable plate 2 from the side of the vehicle body 3. The movable plate is retracted under control of the rotation drive apparatus when the solar vehicle travels so as not to affect travel of the vehicle.

As a preferred implementation, the photovoltaic device further includes a fixed plate 1 on which a solar cell module is arranged. The above rotation drive apparatus 4 may drive the movable plate 2 to rotate to retract the movable plate 2 from the side of the vehicle body 3 to a position under the fixed plate 1. The fixed plate 1 may be configured such that the fixed plate 1 absorbs solar energy together with the movable plate 2 when the movable plate 2 is deployed, thereby further improving solar energy collection capability of the solar vehicle.

Based on a design requirement, the number of the movable plate 2 may be one or more than one. In the embodiment, 4 movable plates 2 are provided. After the rotation drive apparatus 4 drives the movable plate 2 to rotate to retract the movable plate 2 from the side of the vehicle body, the more than one movable plate 2 may be arranged to overlap with each other, such that the vehicle occupies smaller space when the vehicle stops travelling.

Based on the above embodiment, the laterally deployable photovoltaic device according to the embodiment of the present disclosure further includes a height adjusting apparatus which is configured to adjust a height of the movable plate 2 relative to the vehicle body 3. A fixed end of the height adjusting apparatus is fixedly connected to the vehicle body 3, and a height adjusting end of the height adjusting apparatus is fixedly connected to the movable plate 2. The height adjusting apparatus may be implemented by an elevating cylinder. When the solar vehicle is parked in a parking space, the movable plate 2 is elevated to a certain height through the height adjusting apparatus, thereby avoiding conflict with a vehicle in a neighboring parking space.

Furthermore, the laterally deployable photovoltaic device may further include a flipping apparatus which is configured to adjust an angle of the movable plate 2 relative to the vehicle body 3. A fixed end of the flipping apparatus is fixedly connected to the vehicle body 3, and a flipping adjusting end of the flipping apparatus is fixedly connected to the movable plate 2. The flipping apparatus may be implemented by a flipping cylinder. A flipping angle of the movable plate 2 may be adjusted in different parts of the day such that the movable plate can receive solar energy with a maximum area.

A solar vehicle is further provided in the embodiment of the present disclosure. As shown in Figure 1 and Figure 2, the solar vehicle includes the laterally deployable photovoltaic device provided according to any one of the embodiments of the present disclosure, where the photovoltaic device is located on the roof of the solar vehicle.

Further, the roof of the solar vehicle is provided a solar cell module. After the movable plate 2 rotates to be deployed, the solar cell module on the roof of the vehicle and the solar cell module on the movable plate 2 may absorb solar energy together to increase an absorption rate of solar energy. It should be understood by those skilled in the art that in a case where the above laterally deployable photovoltaic device includes the fixed plate 1, the roof may not be provided with the solar cell module and only the fixed plate 1 is provided with the solar cell module. In this way, in a case where the movable plate 2 is retracted, solar energy may be absorbed through the solar cell module on the fixed plate 1.

Structure, characteristics and effects of the present disclosure are described above in detail based on the embodiments illustrated in drawings. The embodiments described above are only preferred embodiments of the present disclosure. The present disclosure is not limited to the scope of implementation as illustrated by the drawings. Any simple changes, equivalents and modifications made to the embodiments based on the technical essence of the present disclosure without departing from the technical solution of the present disclosure fall within the protection scope of the technical solution of the present disclosure.

## Claims

1. A laterally deployable photovoltaic device, comprising: at least one movable plate on which a solar cell module is arranged, a rotation drive apparatus which fixedly connects the movable plate to a vehicle body and a flipping apparatus; wherein
the rotation drive apparatus comprises a fixed end and a drive end, and is secured to the vehicle body via the fixed end, the drive end of the rotation drive apparatus is fixedly connected to the movable plate, and the movable plate is driven by the rotation drive apparatus to rotate to a side of the vehicle body; and
a fixed end of the flipping apparatus is fixedly connected to the vehicle body, and a flipping adjusting end of the flipping apparatus is fixedly connected to the movable plate, for adjusting an angle of the movable plate relative to the vehicle body.

2. The laterally deployable photovoltaic device according to claim 1, wherein the rotation drive apparatus drives the movable plate to rotate to retract the movable plate from the side of the vehicle body.

3. The laterally deployable photovoltaic device according to any one of claims 1 to 2, further comprising: a fixed plate on which a solar cell module is arranged, wherein the rotation drive apparatus drives the movable plate to rotate to retract the movable plate from the side of the vehicle body to a position under the fixed plate.

4. The laterally deployable photovoltaic device according to any one of claims 1 to 2, wherein the number of the movable plate is one or more than one.

5. The laterally deployable photovoltaic device according claim 4, wherein the more than one movable plate is arranged to overlap with each other after the rotation drive apparatus drives the movable plate to rotate to retract the movable plate from the side of the vehicle body.

6. The laterally deployable photovoltaic device according claim 1, wherein the rotation drive apparatus is a motor.

7. The laterally deployable photovoltaic device according claim 1, further comprising a height adjusting apparatus, wherein a fixed end of the height adjusting apparatus is fixedly connected to the vehicle body, and a height adjusting end of the height adjusting apparatus is fixedly connected to the movable plate, for adjusting a height of the movable plate relative to the vehicle body.

8. A solar vehicle, comprising the laterally deployable photovoltaic device according to any one of claims 1 to 7, wherein the photovoltaic device is arranged on a roof of the solar vehicle.

9. The solar vehicle according to claim 8, wherein the roof of the solar vehicle is provided with a solar cell module.
